# FASCICULE DE BREVET EUROPEEN

(11) **EP 0 887 149 B1**
(45) Date de publication et mention de la délivrance du brevet: **19.06.2002**
(21) Numéro de dépôt: 98401055.3
(22) Date de dépôt: 30.04.1998
(51) Int. Cl.: B23Q 7/04, B23Q 17/22

(54) **Procédé de manutention d'une pièce depuis un poste d'attente jusqu'à un poste de traitement**
Verfahren zur Handhabung eines Werkstückes zwischen Warte- und Bearbeitungsstellung
Method for handling a workpiece between hold and work positions

(30) Priorité: 27.06.1997 FR 9708117
(43) Date de publication de la demande: 30.12.1998
(73) Titulaire: Renault Automation Comau, 92365 Meudon La Forêt Cedex (FR)
(72) Inventeur: Dupuis, Claude, 78620 l'Etang-la-Ville (FR); Dujardin, Gauthier, 91120 Palaiseau (FR)
(74) Mandataire: Robert, Jean-Pierre

(56) Documents cités:
- EP-A- 0 508 202
- DE-A- 3 340 074
- PATENT ABSTRACTS OF JAPAN vol. 018, no. 062 (M-1553), 2 février 1994 & JP 05 285776 A (DAIDO STEEL CO LTD), 2 novembre 1993

## Description

La présente invention concerne un procédé de manutention d'une pièce disposée dans un poste d'attente ou de stockage vers un poste de traitement où elle doit être mise en place de manière précise.

Dans de nombreuses unités de fabrication, d'usinage ou d'assemblage, il est nécessaire de déplacer une pièce à traiter depuis un poste où elle est en attente, par exemple un poste de stockage initial ou intermédiaire, vers un poste où elle doit être traitée. La mise en place de chaque pièce au poste de traitement s'accompagne d'une mise en référence de celle-ci dans le poste de traitement afin que les outils de traitement dont les déplacements sont repérés et contrôlés dans le repère du poste de traitement puissent agir correctement sur la pièce.

Dans le cas où le poste de traitement est fixe, par exemple, il existe deux possibilités pour garantir cette mise en référence. La première consiste à présenter la pièce au poste d'attente ou de stockage dans une position déterminée et connue dans le référentiel du poste de traitement et à lui faire parcourir une trajectoire fixe entre cette position initiale et sa position finale au poste de traitement, au moyen d'un automate de manutention. La position finale est alors une fonction univoque de la position initiale donc toujours identique d'une pièce à l'autre puisque la position initiale est par hypothèse invariable. Il convient alors d'équiper le poste d'attente de moyens de calage contre lesquels la pièce doit être taquée pour garantir les coordonnées de la position de départ.

La seconde possibilité consiste à tolérer une incertitude quant à la position de départ, ce qui permet de simplifier ce poste, et à procéder dans le poste de traitement à une mise en référence de la pièce par une reprise de celle-ci au moyen d'organes de taquage dont le poste est équipé.

Chaque méthode demande une étape et des moyens de mise en référence qui pénalisent le coût de fabrication par le besoin d'équipements de calage et un temps de cycle long.

Il existe également le cas où le poste de traitement n'est pas tout-à-fait invariable : sa position n'est connue qu'à une incertitude près. On citera par exemple le cas où le poste de traitement est constitué par l'encadrement de la baie avant d'une caisse de véhicule qu'il faut équiper d'un pare-brise ; la position de cette baie dépend de l'incertitude de la position de la caisse dans le poste fixe et des tolérances dimensionnelles admises dans une structure de caisse de véhicule.

DE -A- 33 40 074, représentant l'état de la technique le plus proche, décrit un procédé selon lequel, entre le poste d'attente et le poste de traitement, la pièce est amenée par l'automate à un poste intermédiaire où sa position réelle est mesurée et comparée avec la position idéale, de manière à modifier en conséquence la trajectoire de l'automate.

Par la présente invention, on propose un procédé dans lequel la mise en référence de la pièce dans le repère du poste de traitement est réalisée sans équipements particuliers de l'un ou l'autre des postes et en temps masqué pendant son passage d'un poste à l'autre. Bien entendu, ce résultat sera atteint à condition que l'outil assurant le transfert d'un poste à l'autre soit de précision suffisante.

A cet effet, l'invention a donc pour objet un procédé de manutention d'une pièce depuis un poste d'attente vers un poste de traitement, la position de certains points singuliers de la pièce dans le poste d'attente étant connue avec une incertitude autour d'une position de référence repérée dans un référentiel fixe et la pièce devant être reçue par des moyens du poste de traitement dont la position de certains points singuliers est connue avec une incertitude autour d'une position de référence repérée dans le même référentiel, dans lequel on utilise un automate préhenseur programmé de manière à décrire alternativement des trajectoires entre deux extrémités de coordonnées connues par rapport aux positions de référence susdites, cet automate étant équipé de capteurs susceptibles de repérer les écarts entre la position réelle des points singuliers de la pièce et ceux du poste de traitement et l'extrémité connue correspondante de la trajectoire, on détermine l'écart entre la position réelle des points singuliers de la pièce respectivement du poste de traitement et l'extrémité connue correspondante de la trajectoire et on fait décrire au préhenseur, après avoir pris en charge la pièce, une trajectoire réelle corrigée en fonction des écarts repérés de manière à modifier les coordonnées de son extrémité au droit du poste de traitement, pour faire coïncider la pièce avec les moyens de réception appartenant au poste de traitement.

Les points singuliers d'une pièce peuvent être formés par certains angles de celle-ci ou des encoches appropriées, ce qui sera le cas par exemple si les pièces sont des tôles découpées pour former des flancs d'emboutissage. De même les points singuliers d'un poste de traitement seront constitués par tout élément, relief, encoche, marque colorée... lié à ce poste, celui-ci pouvant s'entendre comme une zone de réception sur un ensemble dans le poste devant recevoir la pièce.

Les capteurs seront choisis pour être capables d'un balayage d'une zone déterminée à l'intérieur de laquelle ils pourront procéder au repérage d'un point singulier par rapport à une position de référence. La capacité de balayage des capteurs sera adaptée à la plage d'incertitude de la position de la pièce ou du poste d'attente. On pourra prévoir deux types de capteurs, l'un affecté au repérage des points singuliers de la pièce à transporter, et l'autre affecté au repérage des points singuliers du poste de traitement.

Dans le cas particulier où les pièces à déplacer sont fournies en piles au poste d'attente, on adopte comme position de référence pour la pile considérée dans le poste d'attente, la position de la première pièce de la pile repérée dans le référentiel fixe.

Ceci est avantageux car l'incertitude de la position de la pile dans le poste d'attente est plus grande que celle de la position des pièces les unes par rapport aux autres dans la pile ; il est ainsi possible d'équiper le préhenseur de capteurs à capacité de balayage plus limitée et donc moins coûteux que s'il avait fallu à ces capteurs prendre en compte une zone d'incertitude importante du fait de l'imprécision élevée du placement des piles de pièces au poste d'attente.

Dans certaines applications les moyens de réception de la pièce au poste de traitement sont fixes et leur position constitue la position de référence de ces moyens dans le référentiel fixe.

Le procédé selon l'invention peut être mis en oeuvre de deux manières différentes.

Dans une première variante les coordonnées connues des extrémités de chaque trajectoire du préhenseur sont invariables d'une trajectoire à l'autre et correspondent à des positions du préhenseur telles qu'au droit du poste d'attente, ces points singuliers d'une pièce dans sa position de référence seraient repérés par les capteurs à écart nul et qu'au droit du posté de traitement les points singuliers des moyens de réception de ce poste dans leur position de référence seraient repérés à écart nul par les capteurs. Ces extrémités de trajectoire peuvent par exemple être celles qui sont programmées à l'origine pour les mouvements du préhenseur.

Dans une autre variante de réalisation, les coordonnées connues des extrémités de chaque trajectoire du préhenseur sont variables d'une trajectoire à l'autre et telles que les points singuliers de la pièce précédente au poste d'attente et ceux du poste de traitement dans leur position de réception de cette pièce précédente auraient été vus par les capteurs du préhenseur à écart nul.

Cette variante de réalisation est intéressante au cas où, les pièces étant disposées en piles au poste d'attente, le décalage entre les deux pièces les plus écartées l'une de l'autre de la pile est supérieur à la capacité de balayage des capteurs embarqués par le préhenseur alors que le décalage existant entre deux pièces successives de la pile est compris dans la capacité de balayage des capteurs.

On notera enfin que si la position de chaque pièce au poste d'attente est invariable, la phase de détermination de l'écart entre la position réelle des points singuliers de cette pièce et l'extrémité connue de la trajectoire au droit de ce poste d'attente est supprimée.

D'autres caractéristiques et avantages de l'invention ressortiront de la description donnée ci-après d'un mode de réalisation.

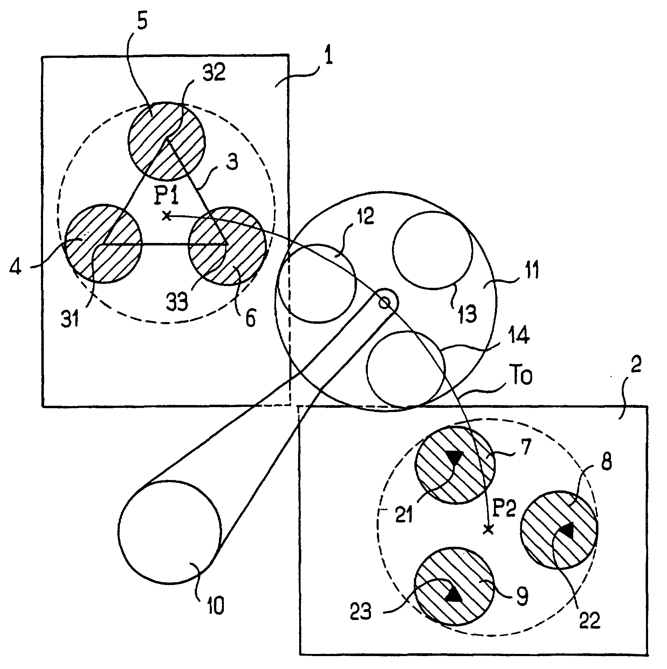

Il sera fait référence au dessin annexé qui, par une figure unique, illustre schématiquement la mise en oeuvre du procédé de l'invention.

A la figure, on a représenté un poste d'attente 1 et un poste de traitement 2. Le poste d'attente 1 est destiné à supporter une pièce 3, comportant par exemple trois points singuliers 31, 32, 33 situés chacun à l'intérieur d'une zone d'incertitude 4, 5 et 6. Le poste de traitement 2 comporte également trois points singuliers 21, 22, 23 chacun situé dans une zone d'incertitude 7, 8 et 9.

Un automate 10 de manutention, par exemple un robot à cinq ou six degrés de liberté, possède une main de préhension 11 capable d'être placée successivement à l'aplomb dû poste 1 et à l'aplomb du poste 2. Cette main de préhension comporte, dans le cas de la figure, trois capteurs 12, 13 et 14. Ce robot est programmé pour pouvoir parcourir alternativement une trajectoire initiale T0 qui possède un point d'extrémité P1 à l'aplomb du poste d'attente 1 et un point d'extrémité P2 à l'aplomb du poste de traitement 2. Ces points d'extrémités sont connus dans un référentiel fixe. Les capteurs 12, 13 et 14 sont respectivement capables de repérer les points singuliers d'une pièce présente dans les zones d'incertitude 31, 32 et 33 et de déterminer les coordonnées de ces points par rapport à une position de référence, par exemple le centre de cette zone qui correspond à la position théorique des pièces dans le poste d'attente prise en compte dans la programmation de la trajectoire T0. Ce repérage peut être réalisé pendant la trajectoire en charge puisque la position de la pièce par rapport aux capteurs ne varie pas pendant cette trajectoire. Lorsque le préhenseur est au point P2 d'extrémité de sa trajectoire à l'aplomb du poste de traitement 2, les capteurs 12, 13 et 14 sont capables de déterminer la position des points singuliers 21, 22 et 23 de ce poste de traitement.

La trajectoire T0 initiale du préhenseur est celle qui permet de faire passer une pièce 3 située au poste 1, dans une position telle que ses points singuliers sont détectés à écart nul par rapport à la position de référence des capteurs 12, 13 et 14, dans le poste de traitement 2 dont les points singuliers sont dans une position correspondant également à la position de référence des capteurs 12, 13 et 14 de sorte que la pièce 3 déchargée dans le poste de traitement 2 est exactement dans la position qui convient pour subir son traitement.

Mais comme dans la pratique les points singuliers de la pièce et/ou les points singuliers du poste de traitement 2 ne sont pas dans une position qui permettrait un transfert de la pièce vers le poste de traitement uniquement le long de la trajectoire théorique du préhenseur, il est nécessaire de procéder à des corrections comme expliqué ci-dessous.

Dans une première application on supposera que le poste de traitement 2 est parfaitement fixe dans l'installation et que ses points singuliers 21, 22, 23 coïncident exactement avec la position de référence des capteurs 12, 13 et 14 lorsque le préhenseur est à l'extrémité P2 de sa trajectoire initiale. Ce cas d'application est notamment celui d'une pièce 3, déposée dans le poste d'attente 1 avec une incertitude quant à sa position, qui doit être placée dans une position invariable dans le poste 2. Selon l'invention, on place la main du préhenseur 11 à l'extrémité P1 de sa trajectoire initiale. Au moyen des capteurs 12, 13 et 14 on relève les coordonnées des points singuliers 31, 32, 33 de la pièce 3 dans le repère fixe. Ces écarts sont introduits dans un calculateur capable de modifier la trajectoire parcourue par la main du préhenseur 11 en direction du poste de traitement 2 afin que la pièce 3 y soit déposée exactement dans la position prescrite. De ce fait, l'extrémité de la trajectoire en charge de la pièce 3 du préhenseur est différente du point P2 de même que, si nécessaire, l'orientation de la main 11 de ce préhenseur. Le relevé des coordonnées et le calcul s'opèrent pendant la première phase de la trajectoire en charge du préhenseur.

La préparation de la manutention de la pièce suivante peut s'effectuer de deux manières différentes.

La première manière consiste à commander le retour du préhenseur selon une trajectoire telle que le préhenseur se retrouve au droit du poste d'attente 1 exactement dans sa position et dans son orientation P1 qui constitue l'extrémité de la trajectoire initiale. La position de la nouvelle pièce présente au poste d'attente 1 sera détectée et la trajectoire en charge du poste 1 vers le poste 2 du préhenseur sera corrigée comme décrit ci-dessus.

La seconde manière pour préparer la manutention de la pièce suivante consiste à modifier par le calcul les coordonnées des deux extrémités de la trajectoire du préhenseur de manière telle que si la pièce suivante se trouve au poste d'attente, exactement dans la même position que la pièce qui vient d'être transportée, et que si les points singuliers du poste de traitement sont également dans la même position que celle dans laquelle les moyens de réception y ont accueilli la pièce précédente (ce qui est le cas lorsque la position de ces moyens est invariable), les capteurs du préhenseur aux extrémités de sa nouvelle trajectoire en charge constateront un décalage nul. Comme en réalité ce ne sera pas le cas, les pièces à transporter n'étant pas dans la même position que la pièce précédente, les capteurs constatent un décalage repéré par rapport aux coordonnées calculées, donc connues, des points d'extrémité de la trajectoire. Et la trajectoire sera corrigée en conséquence pour qu'à son extrémité à l'aplomb du poste de traitement 2 la pièce soit correctement reçue par les moyens de réception de ce poste.

Cette deuxième manière est intéressante pour le cas de manutention de pièces successives présentes au poste d'attente 1 sous forme d'une pile. En effet, on peut imaginer que dans la pile, deux pièces successives soient décalées l'une par rapport à l'autre d'une distance compatible avec la zone d'incertitude que sont capables de détecter les capteurs 12, 13 et 14, mais en revanche, que les deux pièces d'une même pile les plus écartées l'une de l'autre le soient d'une valeur supérieure à cette zone d'incertitude. On peut alors se dispenser de mettre en oeuvre des capteurs qui ont une capacité de balayage importante et donc de parvenir à une économie quant au coût du dispositif mis en oeuvre.

On notera que, dans le cas d'une pile de pièces présentes au poste d'attente 1, pour les mêmes raisons d'économie, il peut être intéressant de procéder à une correction de la trajectoire initiale au début de chaque pile. Pour ce faire, à partir de l'extrémité P1 de la trajectoire initiale programmée au droit du poste d'attente, on détermine les écarts de position de la première pièce de la pile par rapport à la position de référence des capteurs du préhenseur et on corrige ensuite la trajectoire initiale T0, notamment en ce qui concerne son extrémité finale au droit du poste d'attente, en une trajectoire qui est mémorisée pour devenir la trajectoire de base pour l'ensemble de la pile. Cette adaptation initiale pour chaque pile de la trajectoire initiale du préhenseur est notamment intéressante lorsque la précision avec laquelle un dispositif d'amenée de pièces dépose une pile de pièces au poste d'attente est très nettement plus faible que la précision de la position relative de chacune des pièces à l'intérieur de la pile. On comprend en effet que les écarts détectés pour chacune des pièces à l'intérieur de la pile par rapport à la nouvelle extrémité correspondante de la trajectoire initiale sont, par hypothèse inférieurs aux écarts qui auraient été détectés par rapport à l'extrémité semblable de la trajectoire initiale programmée à l'origine. Il s'ensuit que la capacité des capteurs à mettre en oeuvre sur le préhenseur peut être plus faible et que, soit leur coût est inférieur à celui de capteurs de plus grande amplitude, soit leur précision à coût égal peut être augmentée. Par ailleurs, l'amplitude de chaque mouvement correctif étant réduite, les organes du robot sont, toutes choses égales par ailleurs, moins sollicités mécaniquement et leur longévité accrue. La correction préalable de la trajectoire initiale programmée peut être bien entendu réalisée par une opération indépendante au moyen d'un système séparé de repérage de la position de la première pièce de la pile par rapport à l'extrémité de la trajectoire théorique du robot préhenseur tel que programmée.

Dans une autre application de l'invention, la position du poste de traitement 2 peut ne pas être invariable. C'est notamment le cas lorsque ce poste de traitement est par exemple une palette équipée d'un sous-ensemble de véhicules automobiles auquel il faut rapporter un autre sous-ensemble. Dans ce cas le procédé de l'invention comporte l'opération supplémentaire consistant à détecter l'écart de ses points singuliers 21, 22, 23 des moyens de réception du poste de traitement par rapport à leur position de référence, le préhenseur étant dans sa position P2. Selon une première méthode, on procède à cette détection dès l'origine et on amène le préhenseur à la position P1 à l'aplomb du poste d'attente 1. On procède ensuite à la détection de la position réelle de la pièce 3 par rapport à la position de référence des capteurs. Ces deux données permettent au moyen d'un calculateur de corriger la trajectoire en charge du préhenseur pour que la pièce 3 qu'il a prise en charge puisse être apportée dans le poste 2 exactement au droit des moyens de réception de ce poste destiné à l'accueillir. Bien entendu, si la pièce 3 est présente au poste d'attente dans une position invariable, la phase de détection de sa position réelle pourra être supprimée du procédé selon l'invention.

Selon une seconde méthode, la détection de la position réelle des points singuliers susdits se fait à la fin de la course en charge du préhenseur. Cette détection tient compte alors du fait que l'extrémité de la trajectoire au niveau du poste 2 est une extrémité corrigée en fonction des écarts de position de la pièce détectée au poste 1. En effet la position du préhenseur au droit du poste 2 n'est plus l'extrémité connue de la trajectoire initiale'mais l'extrémité également connue d'une trajectoire corrigée par rapport à la trajectoire initiale.

Pour des raisons de simplification de l'exposé, on a considéré dans l'exemple décrit ci-dessus, que les capteurs 12, 13 et 14 étaient à même de repérer à la fois les points singuliers du poste 2 et les points singuliers de la pièce 3. Ce n'est pas sortir du cadre de l'invention que de prévoir d'équiper la main 11 du robot préhenseur 10 de deux types de capteurs différentes les uns affectés à la détection des points familiers du poste 2 et les autres affectés à la détection des points singuliers de la pièce 3.

Les capteurs 12, 13 et 14 sont des capteurs de tous types appropriés mécaniques tels que des palpeurs, ou optiques tels que des caméras. Le repérage de la position des pièces par les capteurs, les calculs de correction de trajectoire et les ordres de commande correspondants sont réalisés pendant l'exécution de la trajectoire en charge du robot, si bien qu'il ne se produit aucune perte de temps par rapport à des opérations de transfert classiquement réalisées par ce type d'appareil. Par ailleurs, l'un des intérêts du procédé de l'invention permet de simplifier tant le poste d'attente que le poste de traitement en supprimant à leur niveau tout ou partie des outils de reprise des pièces qui y sont déposées pour les mettre en référence dans un repère déterminé qui en général est matérialisé par des taquets contre lesquels les pièces sont poussées en butée. Bien entendu la précision de l'automate doit être suffisante pour obtenir cette suppression totale et, avec un automate de précision moindre, il peut être nécessaire de conserver aux postes 1 et 2 certains moyens de reprise afin de compenser le manque de précision de l'automate. On notera à cet effet que le choix entre la solution avec absence totale d'outils de reprise et celle qui demande d'en conserver quelques uns est dicté essentiellement par des considérations économiques.

## Revendications

1. Procédé de manutention d'une pièce (3) depuis un poste d'attente (1) vers un poste de traitement (2), la position de certains points singuliers (31, 32, 33) de la pièce (3) dans le poste d'attente (1) étant connue avec une incertitude autour d'une position de référence repérée dans un référentiel fixe et la pièce devant être reçue par des moyens du poste de traitement (2) dont la position de certains points singuliers (21, 22, 23) est connue avec une incertitude autour d'une position de référence repérée dans le même référentiel, **caractérisé en ce qu'**on utilise un automate (10) préhenseur programmé de manière à décrire alternativement des trajectoires entre deux extrémités de coordonnées connues (P1, P2) par rapport aux positions de référence susdites, cet automate étant équipé de capteurs susceptibles de repérer les écarts entre la position réelle des points singuliers de la pièce (3) et ceux du poste de traitement (2) et l'extrémité connue (P1, P2) correspondante de la trajectoire, **en ce qu'**on détermine ces écarts entre la position réelle des points singuliers (21, 22, 23) du poste de traitement (2), respectivement ceux (31, 32, 33) de la pièce (3), et l'extrémité (P2, P1) connue correspondante de la trajectoire et **en ce qu'**on fait décrire au préhenseur (10), après avoir pris en charge la pièce (3), une trajectoire réelle corrigée en fonction des écarts repérés, de manière à modifier les coordonnées de son extrémité au droit du poste de traitement pour faire coïncider la pièce avec les moyens de réception appartenant au poste de traitement.

2. Procédé selon la revendication 1, appliqué à chacune des pièces d'une pile de pièces présente au poste d'attente (1), **caractérisé en ce qu'**on adopte comme position de référence pour la pile considérée dans le poste d'attente, la position de la première pièce de la pile repérée dans le référentiel fixe.

3. Procédé selon la revendication 1 ou la revendication 2, **caractérisé en ce que** les moyens de réception de la pièce au poste de traitement (2) sont fixes et leur position constitue la position de référence de ces moyens dans le référentiel fixe.

4. Procédé selon l'une des revendications précédentes, **caractérisé en ce que** les coordonnées connues des extrémités de chaque trajectoire du préhenseur sont invariables d'une trajectoire à l'autre et correspondent à des positions du préhenseur telles qu'au droit du poste d'attente, ces points singuliers d'une pièce dans sa position de référence seraient repérés par les capteurs à écart nul et qu'au droit du poste de traitement les points singuliers des moyens de réception de ce poste dans leur position de référence seraient repérés à écart nul par les capteurs.

5. Procédé selon l'une des revendications 1 à 4, **caractérisé en ce que** les coordonnées connues des extrémités de chaque trajectoire du préhenseur sont variables d'une trajectoire à l'autre et telles que les points singuliers de la pièce précédente au poste d'attente et ceux du poste de traitement dans leur position de réception de cette pièce précédente auraient été vus par les capteurs du préhenseur à écart nul.

## Patentansprüche

1. Verfahren zur Übergabe eines Werkstücks (3) von einer Wartestation (1) in eine Bearbeitungsstation (2), wobei die Position einzelner bestimmter Punkte (31, 32, 33) des Werkstücks (3) in der Wartestation (1) mit einer Unschärfe gegenüber einer in einem feststehenden Referenzsystem gegebenen Referenzposition bekannt ist, und das Werkstück von Mitteln der Bearbeitungsstation (2) aufzunehmen ist, und wobei die Position einzefner bestimmter Punkte (21, 22, 23) der Bearbeitungsstation mit einer Unschärfe gegenüber einer in demselben Referenzsystem gegebenen Referenzposition bekannt ist, **dadurch gekennzeichnet,**
**daß** ein Greifautomat (10) verwendet wird, der derart programmiert ist, daß er abwechselnd Bahnen zwischen zwei Endpunkten (P1, P2) beschreibt, deren Koordinaten relativ zu den obengenannten Referenzpositionen bekannt sind, wobei der Greifautomat mit Sensoren ausgestattet ist, die dazu geeignet sind, die Abweichungen zwischen der tatsächlichen Position der bestimmten Punkte des Werkstücks (3) und denen der Bearbeitungsstation (2) sowie dem jeweiligen bekannten Endpunkt (P1, P2) der Bahn zu ermitteln,
**daß** diese Abweichungen der tatsächlichen Position der bestimmten Punkte (21, 22, 23) der Bearbeitungsstation (2), beziehungsweise der Punkte (31, 32, 33) des Werkstücks (3) von dem jeweiligen bekannten Endpunkt (P1, P2) der Bahn bestimmt werden,
und **daß** der Greifautomat (10) nach dem Greifen des Werkstücks (3) dazu veranlaßt wird, eine tatsächliche in Abhängigkeit der ermittelten Abweichungen korrigierte Bahn zu beschreiben, so daß die Endpunkt-Koordinaten in der Bearbeitungsstation derart angepaßt werden, daß veranlaßt wird, daß die Position des Werkstücks mit den Aufnahmemitteln der Bearbeitungsstation übereinstimmt.

2. Verfahren nach Anspruch 1, das auf jedes der Werkstücke eines Stapels von Werkstücken angewandt wird, der in der Wartestation (1) ist, **dadurch gekennzeichnet, daß** als Referenzposition für den in der Wartestation angenommenen Stapel die Position des ersten Werkstücks aus dem dem feststehenden Referenzsystem zugeordneten Stapel verwendet wird.

3. Verfahren nach Anspruch 1 oder 2, **dadurch gekennzeichnet, daß** die Mittel zur Aufnahme des Werkstücks in der Bearbeitungsposition (2) feststehen sind und ihre Position die Referenzposition dieser Mittel in dem feststehenden Referenzsystem darstellt.

4. Verfahren nach einem der vorhergehenden Ansprüche, **dadurch gekennzeichnet, daß** die bekannten Koordinaten der Endpunkte jeder Bahn des Greifautomaten von einer Bahn zur anderen unveränderlich sind und Positionen des Greifautomaten entsprechen, derart, daß im Bereich der Wartestation diese bestimmten Punkte eines Werkstücks in seiner Referenzposition von den Sensoren mit einer Nullabweichung erfaßt werden, und daß im Bereich der Bearbeitungsstation die bestimmten Punkte der Aufnahmemittel dieser Station in ihrer Referenzposition von den Sensoren mit einer Nullabweichung erfaßt werden.

5. Verfahren nach einem der Ansprüche 1 bis 4, **dadurch gekennzeichnet, daß** die bekannten Koordinaten der Endpunkte jeder Bahn des Greifautomaten von einer Bahn zur anderen veränderlich sind, und derart, daß die bestimmten Punkte des vorangegangenen Werkstücks in der Wartestation und die Punkte der Bearbeitungsstation in ihrer Position der Aufnahme dieses vorangegangenen Werkstücks von den Sensoren des Greifautomaten mit einer Nullabweichung erfaßt worden wären.

## Claims

1. A method of taking a part (3) from a waiting station (1) to a treatment station (2), the positions of certain singular points (31, 32, 33) of the part (3) in the waiting station (1) being known with uncertainty around reference positions identified in a fixed frame of reference, and the part needing to be received by reception means in the treatment station (2) having certain singular points (21, 22, 23) whose positions are known with uncertainty about reference positions identified in the same frame of reference, the method being **characterized in that** a gripping robot (10) is used that is programmed to move back and forth along paths between two ends of known coordinates (P1, P2) relative to the above-mentioned reference positions, said robot being fitted with sensors capable of identifying the offsets between the real positions of the singular points of the part (3) and the corresponding known end (P1) of the path, and the offsets between the real positions of the singular points of the treatment station (3) and the corresponding known end (P2) of the path, **in that** these offsets between the real positions of the singular points (21, 22, 23) of the treatment station (2) and the corresponding known end (P2) of the path and between the real positions of the singular points (31, 32, 33) of the part (3) at the corresponding known end (P1) of the path are determined, and **in that** the grip (10), once it has taken hold of the part (3), is caused to follow a real path that is corrected as a function of the identified offsets so as to modify the coordinates of its end at the treatment station so as to cause the part to coincide with the reception means belonging to the treatment station.

2. A method according to claim 1, applied to each of the parts in a stack of parts present at the waiting station (1), the method being **characterized in that** the position of the first part of the stack identified in the fixed frame of reference is adopted as the reference position for the stack in question in the waiting station.

3. A method according to claim 1 or claim 2, **characterized in that** the reception means for the part in the treatment station (2) are stationary and their position constitutes the reference position of said means in the fixed frame of reference.

4. A method according to any preceding claim, **characterized in that** the known coordinates of the ends of each path followed by the grip are invariable from one path to another and correspond to positions of the grip such that in the waiting station the singular points of a part in its reference position can be identified by the sensors when at zero offset, and in the treatment station the singular points of the reception means of the station in their reference position are identified by the sensors when at zero offset.

5. A method according to any one of claims 1 to 4, **characterized in that** the known coordinates of the ends of each path of the grip vary from one path to another and are such that the singular points of the preceding part in the waiting station and the singular points of the treatment station in their position for receiving the said preceding part would be seen by the sensors of the grip as being at zero offset.
